# EUROPÄISCHE PATENTSCHRIFT

(11) **EP 0 899 219 B1**
(45) Veröffentlichungstag und Bekanntmachung des Hinweises auf die Patenterteilung: **11.12.2002**
(21) Anmeldenummer: 98115511.2
(22) Anmeldetag: 18.08.1998
(51) Int. Cl.: B65G 23/44, B65G 47/26

(54) **Förderband, insbesondere Pufferband, mit Spanneinrichtung für das Förderband**
Belt conveyor, particularly accumulator conveyor, having a tensioning device for the conveyor belt
Convoyeur accumulatuer, particulièrement convoyeur accumulateur, avec un dispositif de serrage pour la bande transporteuse

(30) Priorität: 22.08.1997 DE 29715070 U
(43) Veröffentlichungstag der Anmeldung: 03.03.1999
(73) Patentinhaber: Dixie-Union GmbH & Co. KG, 87437 Kempten (DE)
(72) Erfinder: Bochtler, Alois, 87743 Egg (DE)
(74) Vertreter: Pfister, Helmut, Dipl.-Ing.

(56) Entgegenhaltungen:
- EP-A- 0 385 195
- GB-A- 793 229
- US-A- 4 653 634
- US-A- 4 973 027

## Beschreibung

Die Erfindung betrifft ein Förderband, insbesondere ein Pufferband, zum Transport von Lebensmitteln oder anderen Transportgütern mit zwei von einem Rahmen getragenen Umlenkrollen zur Führung mindestens eines endlosen spannbaren Bandes, auf dem das Transportgut aufliegt.

Die Welle oder Achse einer der Umlenkrollen ist von einem Lagergestell getragen, das in Spannrichtung gegenüber dem Rahmen beweglich ist, und mit einer Spanneinrichtung, bestehend aus einer pneumatisch betätigten Zylinder-Kolben-Anordnung, die sich zwischen dem Rahmen und dem Lagergestell erstreckt, bewegt.

Es sind Förderbänder bekannt, die insbesondere als Pufferbänder dienen und beispielsweise zwischen einer Schneidmaschine für Lebensmittel und einer Verpackungsmaschine angeordnet sind. Aufgabe dieser Förderbänder bzw. Pufferbänder ist es, die weiterförderung des Verpackungsgutes entsprechend der Kapazität der nachfolgenden Maschinen durchzuführen.

Wenn beispielsweise Wurst oder Käse verarbeitet wird, kommen die Bänder dieser Einrichtungen direkt mit der Ware in Kontakt und es ergibt sich eine rasche Verschmutzung. Es ist notwendig, die einzelnen Bänder zu reinigen bzw. gegen gereinigte Bänder auszuwechseln. Dieser Auswechslungs- oder Reinigungsvorgang sollte häufig durchgeführt werden, insbesondere um die Gefahr einer Infizierung der Ware möglichst zu reduzieren.

Zu diesem Zwecke ist es möglich, eine hydraulische Anordnung, wie sie beispielsweise aus der US-A-4 653 534 bekannt ist, zu entlüften, um damit das locker gewordene Band von dem Gestell herunternehmen zu können. Zum Spannen des Bandes schiebt der Stempel des Hydraulikkolbens den die Antriebsrolle tragenden Rahmen gegenüber dem Gestell in axialer Richtung nach außen. Die einzeln angeordneten Zylinder und deren pneumatische Zuleitungen bieten für Verunreinigungen eine große Angriffsfläche.

Es ist nun Aufgabe der Erfindung, bei Förderbändern, die beispielsweise einer Schneidmaschine nachgeordnet sind und eine möglichst große Pufferkapazität zu der etwas langsamer arbeitenden Verpackungsmaschine aufweisen, zu gewährleisten, die Bänder mit sehr geringem Arbiets- und Zeitaufwand auszuwechseln und ein schnelles Reinigen der Vorrichtung zu ermöglichen, um die Unterbrechung möglichst kurz zu halten.

Zur Lösung dieser Aufgabe schlägt die Erfindung vor, bei einem Förderband der eingangs angegebenen Gattung die Zylinder in einem Block anzuordnen, der im wesentlichen aus zwei verbundenen Teilen besteht, wobei der eine Teil wenigstens eine Ausnehmung aufweist, die den Zylinder bildet, und der die pneumatischen Leitungen hierfür aufnimmt, und der andere Teil des Blockes die Bohrungen für die Führung der Kolbenstange besitzt.

Der Block ist in einem Rahmen angeordnet, der im wesentlichen aus zwei Platten besteht, von denen die erste Platte an einem Maschinengestell gehalten ist und die zweite Platte das vorkragende Lager einer Umlenkrolle trägt. Der die Zylinderkolbenanordnung aufnehmende Block ist zwischen den beiden Platten angeordnet.

Die vorgesehene pneumatische Spanneinrichtung hat den Vorteil, daß es zum Bandwechseln nur notwendig ist, den Zylinder zu entlüften, so daß das Band abgezogen werden kann und es auch schnell möglich ist, ein Neues in die richtige Lage auf den Umlenkrollen anzuordnen. Nach Wiederbeaufschlagung der Zylinder-Kolben-Anordnung stellt sich die gewünschte Spannung ein, ohne daß eine Nachregulierung notwendig ist. Die erfindungsgemäße Anordnung läßt sich verwirklichen, wenn nur eine Zylinder-Kolben-Anordnung vorgesehen ist. Besser ist es jedoch, wenn zwei Zylinder-Kolben-Anordnungen axial versetzt auf das Lagergestell einwirken. Dadurch kann das Lagergestell eine gewisse Beweglichkeit erhalten, um die Toleranzen des Bandes auszugleichen. Insbesondere ist es vorteilhaft, auf den Umlenkrollen mehrere Bänder nebeneinander anzuordnen. was insbesondere dadurch begünstigt wird, daß die Umlenkrollen von einem Lagergestell getragen ist, daß sich zwischen dem Rahmen erstreckt. Auf diese Weise sind Umlenkrollen in einer beliebigen Breite verwendbar und es können mehrere Bänder nebeneinander angeordnet sein. Besonders günstig hat es sich herausgestellt, wenn bei dem erfindungsgemäßen Förderband eine Kragbauweise für den Rahmen vorgesehen wird. Dadurch können die Bänder ohne Demontage weitere Bauteile, einfach auf der freien Seite abgenommen bzw. von dieser Seite auf die Umlenkrollen aufgebracht werden. Dies gilt auch dann, wenn beispielsweise mehrere Bänder auf den Umlenkrollen nebeneinander angeordnet sind.

Die Erfindung schlägt ferner vor, daß das Lagergestell kammartig gestaltet ist. Das Lagergestell trägt beispielsweise eine durchgehende Achse, auf der dann die einzelnen Umlenkrollen beweglich sind. Das Lagergestell wird insbesondere von einer Traverse getragen, auf die die Zylinder-Kolben-Anordnungen einwirken.

Vorteilhaft ist es, wenn die Umlenkrollen mehrere Bänder nebeneinander tragen und wenn mindestens eine Umlenkrolle für jedes Band ballig ausgebildet ist. Auch wenn die einzelnen Bänder, die beispielsweise aus Kunststoff oder einem ähnlichen Werkstoff bestehen, nur ungenau ausgelegt werden, ergibt sich nach dem Anlauf des Förderbandes wegen der Balligkeit eine mittige Lage jedes Bandes auf den zugehörigen Umlenkrollen bzw. Teilen der Umlenkrollen.

Zylinder-Kolben Anordnungen besitzen in der Regel im Querschnitt kreisförmige Zylinder. Erfindungsgemäß wurde gefunden, daß es vorteilhaft sein kann, von dieser Form abzuweischen. Hierbei schlägt die Erfindung insbesondere vor, daß die Zylinder bzw. Kolben senkrecht zu den Bändern eine kleinere Abmessung aufweisen als parallel zu den Bändern. Dadurch wird eine sehr flache Bauweise erhalten, da auch die Umlenkrollen bzw. mindestens eine der Umlenkrollen einen sehr kleinen Durchmesser aufweisen können und es dennoch möglich ist, die Spanneinrichtung zwischen dem oberen und unteren Trum des Bandes unterzubringen.

Nach einem weiteren Merkmal der Erfindung besteht der Rahmen im Wesentlichen aus zwei Platten, von denen die erste Platte an einem Maschinengestell gelagert ist. Die zweite Platte trägt dabei das vorkragende Lager einer der Umlenkrollen. Zwischen den beiden Platten erstreckt sich die Zylinder-Kolben-Anordnung. Diese Zylinder-Kolben-Anordnung ist insbesondere blockartig ausgebildet und besteht im Wesentlichen aus zwei miteinander verbunden Teilen. Der eine Teil des Blockes weist dabei Ausnehmungen auf, die die Zylinder bilden und nimmt auch die pneumatischen Leitungen hierfür auf. Der andere Teil des Blockes besitzt Bohrungen für die Führungen der Kolbenstangen.

In der Zeichnung ist ein Ausführungsbeispiel der Erfindung schematisch dargestellt. Es zeigen:
- Fig. 1: einen horizontalen Schnitt durch ein Förderband gemäß der Erfindung und
- Fig. 2: einen Schnitt durch die Darstellung der Fig. 1 entsprechend der Schnittlinie II-II.

An einem Maschinengestell 14, dessen Einzelheiten nicht näher gezeigt sind, ist die Lagerplatte 12 befestigt, die zusammen mit der Lagerplatte 13 und dem aus den Teilen 15 und 16 bestehenden Block den Rahmen 5 des Förderbandes bildet. In der Lagerplatte 13 ist das vorkragende Lager 21 der Umlenkrolle 3 angeordnet. Das andere Lager 22 dieser Umlenkrolle wird vom Maschinengestell 14 getragen.

Von den Kolbenstangen 20 der Zylinder-Kolben-Anordnungen 6 und 7, deren Einzelheiten nachstehend noch näher beschrieben werden, wird die Traverse 8 getragen, die ihrerseits mit dem Lagergestell 4 verbunden ist. Dieses Lagergestell ist kammartig gestaltet mit den Armen 23,24,25 und 26. Zwischen den Armen 23 bis 26 erstreckt sich die Achse 1 und zwischen benachbarten Armen sind jeweils die Umlenkrollen 2 drehbar gelagert. Über diese Umlenkrollen 2 und den Umlenkrollen 3 sind die Bänder 9,10 und 11 geführt. Die Umlenkrolle 3 ist dabei abschnittsweise ballig ausgebildet, um einen mittigen Lauf des zugehörigen Bandes auf der Umlenkrolle 3 und damit auch auf den Umlenkrollen 2 sicherzustellen. Auch die Rollen 2 können ballig sein.

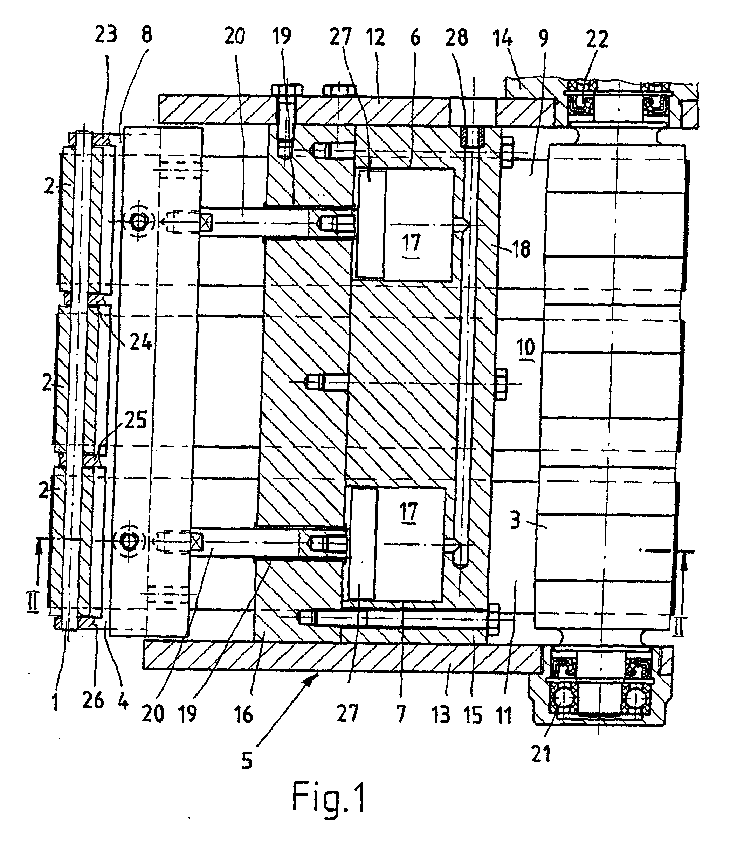

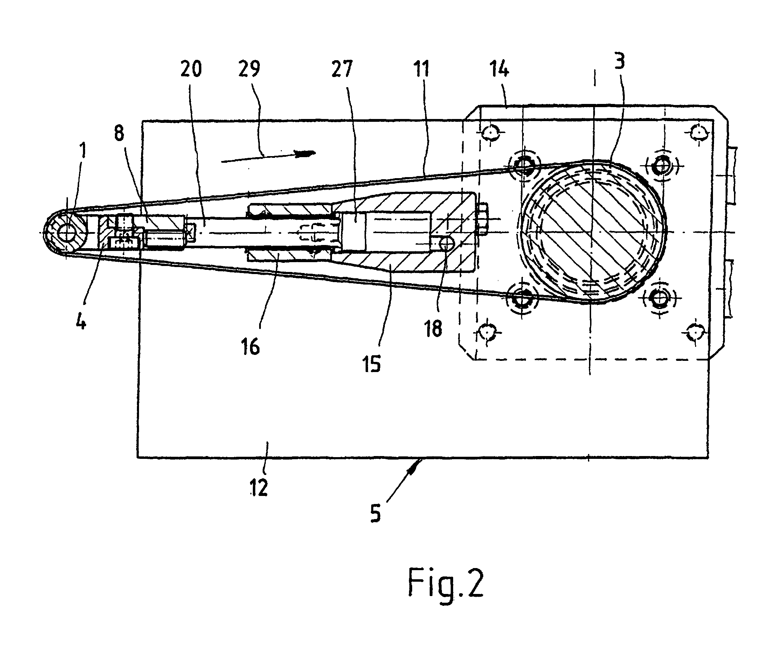

Im Blockteil 15, der sich zwischen den Lagerplatten 12 und 13 erstreckt, sind Ausnehmungen angeordnet, die die Zylinder 17 der Zylinder-Kolben-Anordnungen 6,7 bilden, die im gezeigten Ausführungsbeispiel eine von der Zylinderform abweichende Gestalt besitzen. Die Abmessung in der Bildebene der Fig. 1 ist dabei größer als senkrecht hierzu, wie sich aus der Darstellung der Fig. 2 ergibt. Dadurch wird die Bauhöhe in der Ebene der Fig. 2 beträchtlich reduziert. Die Ausnehmungen bzw. Zylinderräume 17 können beispielsweise durch einen Fräsvorgang gewonnen werden, so daß sich mehr oder weniger ovale Ausnehmungen ergeben. Diesen Ausnehmungen ist die Form der Kolben 27 bzw. der Abdichtungen, die nicht näher dargestellt sind, angepaßt. Die Kolben 27 sind mit den Kolbenstangen 20 verbunden, für die in dem Blockteil 16 jeweils Bohrungen 19 angeordnet sind, die als Führungen dienen.

Im Blockteil 15 sind ferner pneumatischen Leitungen 18 vorgesehen, die zu einem Anschluß 28 zusammengeführt sind. Über diesen Anschluß können die Zylinderräume beaufschlagt bzw. entlüftet werden.

Bei normalen Betrieb des Förderbandes sind die Zylinderräume 17 beaufschlagt und die Kolbenstangen 20 drücken die Traverse 8 mit dem Lagergestell 4 und den Umlenkrollen 2 von der Umlenkrolle 3 weg. Dabei werden die Bänder 9 bis 11 gespannt. Die Umlenkrolle 3 ist angetrieben und es wird eine Förderbewegung, beispielsweise in Richtung des Pfeiles 29, erhalten.

Sollen die Bänder 9 bis 11 ausgetauscht werden, werden die Räume 17 belüftet und die Bänder können wegen der Kragbauweise in der Darstellung der Fig. 1 nach unten abgestreift werden. Zu beachten ist hierbei, daß die Umrisse der Lagerplatte 13 sehr gering sind und nicht über die Umrisse der Bänder 9 - 11 hinausragen, so daß die Bänder über diese Lagerplatte 13 abgestreift werden können. Die Lagerplatte 12 muß in ihren Abmessungen nicht mit der Lagerplatte 13 übereinstimmen, sondern kann, da sie mit dem Maschinengestell 14 zusammenwirkt, größere Dimensionen aufweisen.

Sind die Bänder 9 bis 11 abgestreift, können die neuen Bänder aufgeschoben werden. Dieser Vorgang kann auch bei laufender Umlenkrolle 3 vorgenommen werden, da wegen der fehlenden Spannung die Bänder nur mäßig mitgenommen werden. Sind alle Bänder wieder in die richtige Lage gebracht worden, werden die Räume 17 beaufschlagt und die gewünschte Spannung ergibt sich ohne weitere Regelungen.

Die Haltung der Kolbenstangen 20 in der Traverse 8 können starr sein. Eine Anpassung der Traverse 8 und des Lagergestelles 4 an die Bänder ergibt sich durch das Spiel in den Führungen 19. Es kann aber auch zwischen der Traverse 8 und den Kolbenstangen eine gewisse Beweglichkeit zugelassen werden.

## Patentansprüche

1. Förderband, insbesondere Pufferband, zum Transport von Lebensmitteln oder anderen Transportgütern mit zwei von einem Rahmen (5) getragenen Umlenkrollen (2,3) zur Führung mindestens eines endlosen spannbaren Bandes (9,10, 11), auf dem das Transportgut aufliegt, wobei die Welle oder Achse (1) einer der Umlenkrollen (2,3) von einem Lagergestell (4) getragen ist, das in Spannrichtung gegenüber dem Rahmen (5) beweglich ist, mit einer Spanneinrichtung, bestehend aus einer pneumatisch betätigten Zylinder-Kolben-Anordnung (6,7), die sich zwischen dem Rahmen (5) und dem Lagergestell (4) erstreckt, **dadurch gekennzeichnet, daß** der Zylinder (17) in einem Block angeordnet ist, der im wesentlichen aus zwei verbundenen Teilen (15,16) besteht, wobei der eine Teil (15) wenigstens eine Ausnehmung aufweist, die den Zylinder (17) bildet, und der die pneumatischen Leitungen (18) hierfür aufnimmt, und der andere Teil (16) des Blockes die Bohrungen (19) für die Führung der Kolbenstange (20) besitzt und daß der Rahmen (5), der den Block aufnimmt, im Wesentlichen aus zwei Platten (12,13) besteht, von denen die erste Platte (12) an einem Maschinengestell (14) gehalten ist, daß die zweite Platte (13) das vorkragende Lager (21) einer Umlenkrolle (3) trägt und zwischen den beiden Platten (12,13) der die Zylinder-Kolben-Anordnung (6,7) aufnehmende Block angeordnet ist.

2. Förderband nach Anspruch 1, **gekennzeichnet durch** zwei Zylinder-Kolben-Anordnungen (6,7), die beide axial versetzt auf das Lagergestell (4) einwirken.

3. Förderband nach einem oder beiden der vorhergehenden Ansprüche, **dadurch gekennzeichnet, daß** die Umlenkrollen (2,3) mehrere Bänder (11) nebeneinander tragen.

4. Förderband nach einem der vorhergehenden Ansprüche, **dadurch gekennzeichnet, daß** mindestens eine Umlenkrolle (3) für jedes Band (9,10,11) ballig ausgebildet ist.

5. Förderband nach einem oder mehreren der vorhergehenden Ansprüche, **dadurch gekennzeichnet, daß** das Lagergestell (4) kammartig ausgebildet ist und eine durchgehende Achse (1) für die Umlenkrollen (2) trägt.

6. Förderband nach einem oder mehreren der vorhergehenden Ansprüche, **dadurch gekennzeichnet, daß** eine Traverse (8) vorgesehen ist, die einerseits das Lagergestell (4) trägt und andererseits mit den Kolbenstangen (20) der Zylinder-Kolben-Anordnungen (6,7) verbunden ist.

7. Förderband nach einem oder mehreren der vorhergehenden Ansprüche, **dadurch gekennzeichnet, daß** der Zylinder (17) bzw. der Kolben (24) der Zylinder-Kolben-Anordnung (6,7) senkrecht zu dem Band bzw. den Bändern (9,10,11) kleinere Abmessungen aufweisen als parallel zu den Bändern.

8. Förderband nach einem oder mehreren der vorhergehenden Ansprüche, **gekennzeichnet durch** eine Kragbauweise für den Rahmen.

## Claims

1. Conveying belt, in particular buffer belt, for transporting food or other transport goods, with two deflection rollers (2, 3) carried by a frame (5) in order to guide at least one endless tensible belt (9, 10, 11) on which the transport good lies, where the shaft or axis (1) of one of the deflection rollers (2, 3) is carried by a bearing frame (4) which can be moved in clamping direction towards the frame (5), with a clamping device comprising a pneumatically activated cylinder piston arrangement (6, 7) which extends between the frame (5) and the bearing frame (4), **characterised in that** the cylinder (17) is arranged in a block which comprises essentially two connected parts (15, 16), one part (15) having at least one recess, which forms the cylinder (17) and holds the pneumatic conductions (18) for that, and the other part (16) of the block having the borings (19) for the guide of the piston rod (20), and that the frame (5) which holds the block comprises essentially two plates (12, 13), the first plate (12) being held at a machine frame (14), and that the second plate (13) carries the projecting bearing (21) of a defection roller (3) and the block which holds the cylinder piston arrangement (6, 7) is arranged between the two plates (12, 13).

2. Conveying belt according to claim 1, **characterised by** two cylinder piston arrangements (6, 7) which both act, axially displaced, on the bearing frame (4).

3. Conveying belt according to one or both of the preceding claims, **characterised in that** the deflection rollers (2, 3) carry several belts (11) side by side.

4. Conveying belt according to one or more of the preceding claims, **characterised in that** at least one deflection roller (3) for each belt (9, 10, 11) is formed crowned.

5. Conveying belt according to one or more of the preceding claims, **characterised in that** the bearing frame (4) is designed like a comb and supports a continuous axis (1) for the deflection rollers (2).

6. Conveying belt according to one or more of the preceding claims, **characterised in that** a crosshead (8) is provided which, on the one hand, carries the bearing frame (4) and, on the other hand, is connected with the piston rods (20) of the cylinder piston arrangements (6, 7).

7. Conveying belt according to one or more of the preceding claims, **characterised in that** the cylinder (17), respectively the piston (24) of the cylinder piston arrangement (6, 7), have smaller dimensions perpendicularly to the belt, respectively the belts (9, 10, 11), than parallel to the belts.

8. Conveying belt according to one or more of the preceding claims, **characterised by** a cantilever construction for the frame.

## Revendications

1. Transporteur à bande et en particulier transporteur tampon destiné au transport de denrées ou d'autres biens à transporter, possédant deux poulies (2, 3) maintenues par un cadre (5) guidant au moins une bande sans fin (9, 10, 11) qui peut être tendue, sur laquelle est posé le bien à transporter, l'arbre ou l'axe (1) d'une des poulies (2, 3) étant maintenu par une structure de support (4) mobile par rapport au cadre (5) dans la direction de transport, et un dispositif-tendeur consistant en un ensemble cylindre-piston (6, 7) commandé par un moyen pneumatique et situé entre le cadre (5) et la structure de support (4), **caractérisé en ce que** le cylindre du vérin (17) est situé dans un bloc consistant principalement en deux parties liées (15, 16) dont une (15) possède au moins un évidement fonctionnant comme cylindre de vérin (17) et recevant les tubes de commande pneumatique (18) et dont l'autre (16) possède les perçages pour le guidage de la tige du piston (20), et **en ce que** le cadre (5) recevant le bloc consiste essentiellement en deux plaques (12, 13) dont la première (12) est fixée sur le cadre de la machine (14) et la deuxième (13) supporte le roulement débordant (21) d'une poulie (3), le bloc formant l'ensemble cylindre-piston (6,7) étant situé entre ces deux plaques (12, 13).

2. Transporteur à bande selon la revendication 1, **caractérisé par** deux ensembles cylindre-piston (6, 7) agissant tous les deux, l'un décalé par rapport à l'autre, sur la structure de support (4).

3. Transporteur à bande selon une ou deux revendications précédentes, **caractérisé en ce que** les poulies (2, 3) supportent plusieurs bandes (11) côte à côte.

4. Transporteur à bande selon une ou plusieurs des revendications précédentes, **caractérisé en ce qu'**au moins une poulie (3) pour chacune des bandes (9, 10, 11) est ovoïde.

5. Transporteur à bande selon une ou plusieurs des revendications précédentes, **caractérisé en ce que** la structure de support (4) possède une sorte de peigne et un axe (1) le traversant destiné aux poulies (2).

6. Transporteur à bande selon une ou plusieurs des revendications précédentes, **caractérisé en ce qu'**une traverse (8) supporte la structure de support (4) et est liée aux tiges de piston (20) des ensembles cylindre-piston (6, 7).

7. Transporteur à bande selon une ou plusieurs des revendications précédentes, **caractérisé en ce que** les dimensions du cylindre (17) ou du piston (24) de l'ensemble cylindre-piston (6, 7) sont plus petites dans la direction perpendiculaire à celle de la bande ou des bandes (9, 10, 11) que celle parallèle aux bandes.

8. Transporteur à bande selon une ou plusieurs des revendications précédentes, **caractérisé par** une construction dépassant du cadre de machine.
